# EUROPÄISCHE PATENTSCHRIFT

(11) **EP 3 172 971 B1**
(45) Veröffentlichungstag und Bekanntmachung des Hinweises auf die Patenterteilung: **27.01.2021**
(21) Anmeldenummer: 15197051.4
(22) Anmeldetag: 30.11.2015
(51) Int. Cl.: A23L 13/50, A23L 13/20, A23L 13/60

(54) **VERFAHREN ZUR HERSTELLUNG EINES NAHRUNGSMITTEL-ZWISCHENPRODUKT ZUR HERSTELLUNG VON GEFLÜGELFLEISCHPRODUKTEN**
PREPRATION OF AN INTERIM FOOD PRODUCT FOR THE PREPARATION OF POULTRY MEAT PRODUCTS
PROCEDE DE PREPARATION D'UN PRODUIT INTERMEDIAIRE DE PRODUIT ALIMENTAIRE DESTINE A FABRIQUER DES PRODUITS DE BASE DE VIANDE DE VOLAILLE

(43) Veröffentlichungstag der Anmeldung: 31.05.2017
(73) Patentinhaber: Micarna SA, 1784 Courtepin (CH)
(72) Erfinder: Schiller, Ralf, 3212 Gurmels (CH)
(74) Vertreter: Keller Schneider Patent- und Markenanwälte AG (Bern)

(56) Entgegenhaltungen:
- EP-A1- 2 856 887
- WO-A1-2013/053607
- FR-A1- 2 867 952
- GB-A- 2 087 210
- US-A- 3 173 795
- L.B. BONIFER ET AL: "Chicken Skin Composition As Affected By Aqueous Washing", JOURNAL OF FOOD SCIENCE, Bd. 61, Nr. 5, 1. September 1996 (1996-09-01), Seiten 895-898, XP55166710, ISSN: 0022-1147, DOI: 10.1111/j.1365-2621.1996.tb10897.x
- "Meat products handbook : practical science and technolog:Whitening (bleaching) of meat; Production and use of pork or chicken skin emulsion in cooked sausages; Crumbed products", 1. Januar 2006 (2006-01-01), MEAT PRODUCTS HANDBOOK : PRACTICAL SCIENCE AND TECHNOLOGY, CRC PRESS [U.A.] ; WOODHEAD PUBL, BOCA RATON, FLA. [U.A.]; CAMBRIDGE, PAGE(S) 133,246 - 249,492, XP002735458, ISBN: 1-84569-050-8 * das ganze Dokument *
- Vivian Feddern ET AL: "Physico-chemical composition, fractionated glycerides and fatty acid profile of chicken skin fat", EUROPEAN JOURNAL OF LIPID SCIENCE AND TECHNOLOGY., vol. 112, no. 11, 13 October 2010 (2010-10-13), pages 1277-1284, XP055502802, DE ISSN: 1438-7697, DOI: 10.1002/ejlt.201000072
- K.S Sheu ET AL: "Yield and quality characteristics of edible broiler skin fat as obtained from five rendering methods", JOURNAL OF FOOD ENGINEERING, vol. 55, no. 3, 1 December 2002 (2002-12-01), pages 263-269, XP055502811, GB ISSN: 0260-8774, DOI: 10.1016/S0260-8774(02)00100-0

## Beschreibung

### Technisches Gebiet

Die Erfindung betrifft ein Verfahren zur Herstellung eines Nahrungsmittel-Zwischenprodukts zur Herstellung von Geflügelfleischprodukten, enthaltend eine Masse aus Haut von Hühnern, Hühner-Abdominalfett und Wasser.

### Stand der Technik

Geflügelfleischprodukte, insbesondere Wurstwaren aus Geflügelfleisch, erfreuen sich immer grösserer Beliebtheit. Dies insbesondere deshalb, weil viele Konsumenten aus ernährungstechnischen, religiösen oder weltanschaulichen Gründen auf den Konsum von gewissen Fleischarten, welche üblicherweise in Wurstwaren enthalten sind, z. B. Schweinefleisch, verzichten.

Derartige Fleischarten lassen sich in Wurstwaren aber nicht ohne Weiteres durch Geflügelfleisch ersetzen, weil letzteres hinsichtlich Textur, Konsistenz, thermischem Verhalten und Geschmack ganz andere Eigenschaften aufweist. Gerade der Fettanteil von Würsten lässt sich nicht einfach durch Geflügelfett ersetzen. So besteht der Fettanteil von beispielsweise Mortadella aus Schweinenacken-Fett, weist damit einen charakteristischen Geschmack sowie eine charakteristische Textur auf und ist bei üblichen Umgebungstemperaturen wärmebeständig. Geflügelfett, z. B. Abdominalfett von Hühnern, hat eine ganz andere Textur, einen unterschiedlichen Geschmack und zerläuft bereits bei leicht erhöhter Umgebungstemperatur. Dies ist insbesondere durch den hohen Anteil von ungesättigten Triglyceriden und das Fehlen eines eigentlichen Bindehautgewebes bedingt.

Es sind mehrere Ansätze bekannt, um dieses Problem zu lösen.

So beschreibt die EP 2 856 887 A1 (Deutsches Institut für Lebensmitteltechnik e. V.) beispielsweise ein Verfahren zur Herstellung von Geflügelwurst allein auf der Basis von Geflügel, bzw. ohne Zusatz von Schweinespeck oder Pflanzenfett. Dabei wird ein Geflügelfetterzeugnis allein auf Basis von Geflügelhaut hergestellt, die zerkleinert und erwärmt wird. Namentlich werden ein erstes verarbeitetes Geflügelhauterzeugnis (Emulsion) und ein zweites verarbeitetes Geflügelhauterzeugnis (Gelvorstufe) hergestellt und anschliessend gemischt und gekühlt. Das Fetterzeugnis sei für die Wurstherstellung geeignet.

Die FR 2 867 952 B1 (Centre de Cooperation Internationale en Recherche Agronomique pour Developpement) beschreibt ein weiteres Verfahren zur Herstellung eines Geflügelfettprodukts. Dabei werden durch Trockenfraktionierung Fettanteile gewonnen, indem Geflügelfette (z. B. Abdominalfett oder Hautfett) zunächst erhitzt und anschliessend abgekühlt werden. Beim Abkühlen findet eine selektive Kristallisation der am meisten gesättigten Triglyceride statt. Durch eine Filterung wird dann die festere, stearinhaltige Fraktion abgeschieden. Diese kann als Fettphase in Wurstwaren eingesetzt werden.

Die bekannten Verfahren ermöglichen die Herstellung von Wurstwaren, die nebst Geflügelfleisch keine weiteren Fleischanteile enthalten und die die erforderliche Temperaturbeständigkeit aufweisen. Trotzdem besteht hinsichtlich Textur und Geschmack noch Verbesserungspotenzial.

### Darstellung der Erfindung

Aufgabe der Erfindung ist es, ein dem eingangs genannten technischen Gebiet zugehörendes Verfahren zu Herstellung eines Nahrungsmittel-Zwischenprodukts zu schaffen, welches einen verbesserten Geschmack und eine verbesserte Textur aufweist.

Die Lösung der Aufgabe ist durch die Merkmale des Anspruchs 1 definiert. Gemäss der Erfindung werden bei dem Verfahren 32 - 40 Gew.-% Hühner-Abdominalfett, 32 - 40 Gew.-% Haut von Hühnern, 7-11 Gew.-% Hühner-Eiweiss, 1 - 2.5 Gew.-% Kochsalz, 12 - 25 Gew.% Wasser sowie Oxidationsmittel und Traubenzucker zerkleinert zum Erhalt einer Masse, diese Masse in eine Wursthülle abgefüllt und die abgefüllte Masse gegart.

Es hat sich gezeigt, dass das erfindungsgemässe Zwischenprodukt hinsichtlich Geschmack und Konsistenz vorteilhaft ist. Es bleibt auch bei erhöhter Umgebungstemperatur fest. Die Farbe ist weiss und entspricht weitgehend derjenigen von Schweinespeck, was ebenfalls wünschenswert ist. Die benötigten Zutaten sind auf dem Markt verfügbar.

Das Zwischenprodukt eignet sich beispielsweise für die Herstellung von Geflügelsalami oder Geflügelmortadella, die keine anderen Fleischarten und bevorzugt auch kein Pflanzenfett enthalten. Das Zwischenprodukt ist komplett frei von tierischen Bestandteilen, die nicht von Geflügel stammen. Die Nutzung des Zwischenprodukts ist - im Gegensatz zu gewissen aus dem Stand der Technik bekannten Produkten - primär dort angezeigt, wo Wurstwaren hergestellt werden sollen, deren Fleischgehalt ausschliesslich durch Geflügelfleisch gebildet ist und weniger dort, wo ein Gesamtfettgehalt der Wurstware stark reduziert werden soll. Es ist deshalb besonders wichtig, dass das erfindungsgemässe Zwischenprodukt vorteilhafte Eigenschaften in Bezug auf Textur und Geschmack aufweist.

Ein Anteil an Geflügelhaut beträgt 32 - 40 Gew.% und ein Anteil an Geflügelfett beträgt ebenfalls 32 - 40 Gew.%. Die Geflügelhaut trägt so ausreichend zur gewünschten Festigkeit des Zwischenprodukts bei.

Alternativ (nicht erfindungsgemäss) sind auch Zusammensetzungen denkbar, bei welchen der Anteil an Geflügelhaut tiefer ist. Auch hier kann es notwendig sein, ergänzende Massnahmen zu treffen, um die gewünschte Temperaturbeständigkeit zu erreichen.

Mit Vorteil beträgt der Fettanteil des Zwischenprodukts mindestens 35 Gew.%. Es ist so gut als Fettbestandteil von Würsten wie Mortadella und Salami geeignet.

Die Verwendung von Hühnerhaut ermöglicht gute Ergebnisse.

Alternativ (nicht erfindungsgemäss) kann auch die Haut anderen Geflügels, z. B. Truthahn, Ente oder Gans, verwendet werden. Das Geflügelfett und die Geflügelhaut können von denselben oder unterschiedlichen Tieren stammen. Auch eine Mischung von Haut und Fett verschiedener Tiere ist möglich.

Die Verwendung des gut verfügbaren und kostengünstigen Abdominalfetts von Hühnern ermöglicht gute Ergebnisse sowohl was die Textur, den Geschmack als auch die Farbe des Zwischenprodukts betrifft.

Alternativ (nicht erfindungsgemäss) kann ganz oder teilweise anderes Geflügelfett zum Einsatz gelangen.

Vorzugsweise handelt es sich beim Hühnereiweiss um Eiweiss aus Hühnereiern. Dessen Verwendung hat sich als sehr geeignet herausgestellt, es ist zudem gut verfügbar.

Alternativ (nicht erfindungsgemäss) kommt das Eiweiss von Eiern anderer Geflügelarten zum Einsatz.

Der Anteil des Geflügeleiweisses mindestens 7 Gew.%. Die entsprechende Zusammensetzung ermöglicht die Herstellung einer ausreichend dichten, schnittfesten und beständigen Masse.

Bei der erfindungsgemässen Herstellung des Zwischenprodukts werden
- 32 - 40 Gew.% Hühner-Abdominalfett
- 32 - 40 Gew.% Haut von Hühnern
- 7-11 Gew.% Hühner-Eiweiss
- 1 - 2.5 Gew.% Kochsalz
- 12 - 25 Gew.% Wasser
und dazu Antioxidationsmittel, Traubenzucker und bei Bedarf Gewürze verwendet.

Ein erfindungsgemässes Nahrungsmittel-Zwischenprodukt lässt sich durch ein Verfahren mit folgenden Schritten herstellen:
a) Zerkleinern von Geflügelhaut, Geflügelfett und Eis zum Erhalt einer Masse;
b) Abfüllen der Masse in eine Hülle;
c) Garen der abgefüllten Masse.

Das Hühnereiweiss wird bevorzugt dem Zerkleinerungsgut vor dem Zerkleinern zugegeben. Auch eine Zugabe in den Zerkleinerungsprozess, also zu (teilweise) zerkleinertem Zerkleinerungsgut ist möglich.

Mit Vorteil erfolgt das Zerkleinern durch Kuttern. Dies führt zur gewünschten starken Zerkleinerung und zu einer guten Durchmischung des Zerkleinerungsguts. Das Eis verhindert im Zerkleinerungsprozess das Gerinnen des im Zerkleinerungsgut enthaltenen Eiweisses aufgrund der ansonsten durch das Kuttern entstehenden Wärme.

Bevorzugt erfolgt das Garen in einem Räucherschrank. Es ergibt sich ein gleichmässiger Gareffekt, die Zugabe von Räuchergut zur Beeinflussung des Geschmacks ist möglich aber nicht zwingend.

Andere Garmethoden sind ebenfalls möglich. Auf einen gleichmässigen Garvorgang ist zu achten, damit ein hygienisch unbedenkliches Zwischenprodukt mit gleichmässigen Eigenschaften erhalten wird.

Mit Vorteil werden Gartemperatur und Garzeit derart gewählt, dass eine Kerntemperatur der abgefüllten Masse von mindestens 70 °C, insbesondere mindestens 72 °C, erreicht wird. Dadurch werden Keime abgetötet, und das Zwischenprodukt ist für die Weiterverarbeitung in roh zu geniessende Wurstwaren geeignet. Der Garprozess bis zu einer solchen Kerntemperatur stellt zudem sicher, dass das Zwischenprodukt die erforderliche mechanische und thermische Beständigkeit sowie die gewünschte Textur und den gewünschten Geschmack aufweist.

Mit Vorteil wird die abgefüllte Masse nach dem Garen mit kaltem Wasser abgeschreckt. Dies führt zu einem definierten Ende des Garvorgangs und erlaubt eine schnellere Weiterverarbeitung.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:

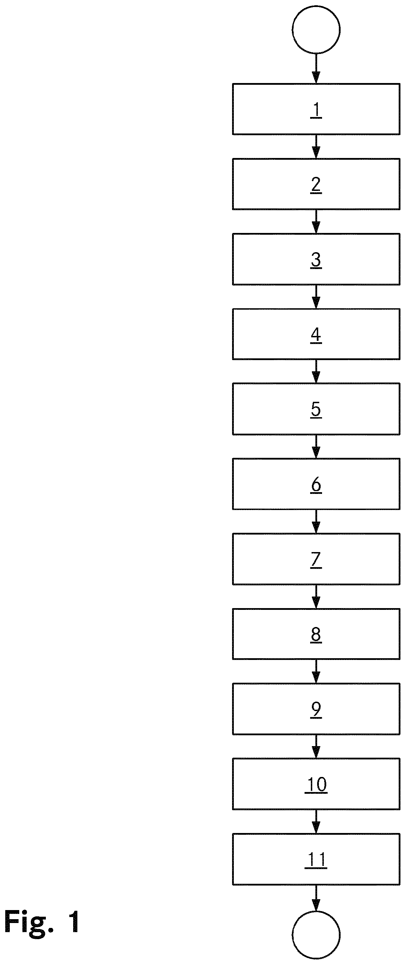

- Fig. 1: ein Flussdiagramm eines Herstellungsverfahrens für ein erfindungsgemässes Zwischenprodukt.

### Wege zur Ausführung der Erfindung

Ein erfindungsgemässes Zwischenprodukt lässt sich durch das im Folgenden beschriebene Verfahren herstellen, es ist im Flussdiagramm gemäss Figur 1 dargestellt. Die absoluten Mengenangaben sind beispielhaft zu verstehen, sie lassen sich - im üblichen Rahmen - proportional skalieren:
1. 18 kg Eis einer Temperatur von -10 °C oder weniger werden in eine Kutterschüssel gegeben (Schritt 1);
2. 36 kg tiefgekühltes Hühner-Abdominalfett werden zugegeben (Schritt 2);
3. 1.8 kg Kochsalz, 360 g Natriumcitrat (E 331), 50 g Natrium-Ascorbat (E 301), 270 g Dextrose und 30 g Rosmarin-Extrakt (E 392) werden zugegeben (Schritt 3);
4. 36 kg Haut von Hühnern werden zugegeben (Schritt 4);
5. 9 kg Hühner-Eiweiss werden zugegeben (Schritt 5);
6. die Zutaten werden während 5 Minuten auf hoher Stufe gekuttert (Schritt 6);
7. bei tieferer Stufe erfolgt das Auslaufen des Kutters (Schritt 7);
8. die Masse wird dann dem Kutter entnommen und in Kunstdärme eines Durchmessers von 120 mm abgefällt (Schritt 8);
9. die ca. 50 m langen Stangen werden auf einen Rauchwagen gelegt und im Räucherschrank bei 78 °C garen, bis eine Kerntemperatur von mindestens 72 °C erreicht wird (Schritt 9);
10. das Produkt wird dann während 30 Minuten mit kaltem Wasser übergossen (abgeschreckt) (Schritt 10);
11. schliesslich wird das Produkt im Kühlraum bei ca. 2 °C und hoher Luftfeuchtigkeit (mind. 80%) während 12-15 Stunden auf eine Kerntemperatur von max. 5 °C abgekühlt (Schritt 11).

Das Zwischenprodukt weist einen Fettgehalt von 42 Gew.%, und einen Eiweissgehalt von 11.4 Gew.% auf. Der Kochsalzgehalt beträgt 1.8 Gew.%, der Natriumgehalt entsprechend 0.7 Gew.%. Der Anteil an Kohlenhydraten bzw. Zucker beträgt weniger als 1 Gew.%.

Das Zwischenprodukt lässt sich gekühlt bei 0-2 °C 20 Tage lagern, tiefgekühlt bei -18 °C 100 Tage.

Das Zwischenprodukt ist bereit zur weiteren Verwendung, z. B. als Fettbestandteil von Wurstwaren wie Mortadella oder Salami. Es wird dazu aus der Hülle herausgelöst und analog zu anderen Fettanteilen (z. B. Schweinenacken-Fett) verwendet. Es wird beispielsweise in Würfel oder Stangen geschnitten, gewolft oder gekuttert. Anschliessend wird es mit einer Fleischmasse (z. B. reinem Geflügelfleisch) und mit Zusatzstoffen (Salze, Gewürze usw.) gemischt und abgefüllt, z. B. in Wursthüllen. Diese Würste können anschliessend vorgetrocknet und/oder kaltgeräuchert und/oder gereift werden.

Die Erfindung ist nicht auf das beschriebene Ausführungsbeispiel beschränkt. So lassen sich die Anteile der einzelnen Zutaten wie oben beschrieben variieren. Zum Generieren eines spezifischen Geschmacks lassen sich zudem die verwendeten Gewürze anpassen, oder beim Garprozess im Räucherschrank wird Räuchergut eingesetzt.

Zusammenfassend ist festzustellen, dass die Erfindung ein dem eingangs genannten technischen Gebiet zugehörendes Nahrungsmittel-Zwischenprodukt schafft, welches einen verbesserten Geschmack und eine verbesserte Textur aufweist.

## Patentansprüche

1. Verfahren zur Herstellung eines Nahrungsmittel-Zwischenprodukts **gekennzeichnet durch** folgende Schritte:
a) Zerkleinern von 32 - 40 Gew.-% Hühner-Abdominalfett, 32 - 40 Gew.-% Haut von Hühnern, 7-11 Gew-% Hühner-Eiweiss, 1 - 2.5 Gew.-% Kochsalz, 12 - 25 Gew.-% Wasser sowie Oxidationsmittel und Traubenzucker zum Erhalt einer Masse;
b) Abfüllen der Masse in eine Hülle;
c) Garen der abgefüllten Masse.

2. Verfahren nach Anspruch 1, **dadurch gekennzeichnet, dass** für das Zerkleinern dem Zerkleinerungsgut Hühnereiweiss zugegeben wird.

3. Verfahren nach Anspruch 1 oder 2, **dadurch gekennzeichnet, dass** das Zerkleinern durch Kuttern erfolgt.

4. Verfahren nach einem der Ansprüche 1 bis 3, **dadurch gekennzeichnet, dass** das Garen in einem Räucherschrank erfolgt.

5. Verfahren nach einem der Ansprüche 1 bis 4, **dadurch gekennzeichnet, dass** Gartemperatur und Garzeit derart gewählt werden, dass eine Kerntemperatur der abgefüllten Masse von mindestens 70 °C, insbesondere mindestens 72 °C, erreicht wird.

6. Verfahren nach einem der Ansprüche 1 bis 5, **dadurch gekennzeichnet, dass** die abgefüllte Masse nach dem Garen mit kaltem Wasser abgeschreckt wird.

## Claims

1. Method for producing a food intermediate, **characterized by** the following steps:
a) comminuting 32-40 wt% of chicken abdominal fat, 32-40 wt% of chicken skin, 7-11 wt% of chicken egg white, 1-2.5 wt% of table salt, 12-25 wt% of water, and also oxidizing agents and glucose dextrose, to give a mass;
b) dispensing the mass into a casing;
c) cooking the dispensed mass.

2. Method according to Claim 1, **characterized in that** for the comminuting, chicken egg white is added to the comminution material.

3. Method according to Claim 1 or 2, **characterized in that** the comminuting is accomplished by bowl-cutter chopping.

4. Method according to any of Claims 1 to 3, **characterized in that** the cooking is accomplished in a smoking cabinet.

5. Method according to any of Claims 1 to 4, **characterized in that** cooking temperature and cooking time are selected such that a core temperature of the dispensed mass of at least 70°C, more particularly at least 72°C, is attained.

6. Method according to any of Claims 1 to 5, **characterized in that** after the cooking the dispensed mass is quenched with cold water.

## Revendications

1. Procédé pour la préparation d'un produit intermédiaire de produit alimentaire, **caractérisé par** les étapes suivantes :
a) broyage de 32 à 40 % en poids de graisse abdominale de poulets, 32 à 40 % en poids de peau de poulets, 7 à 11 % en poids de protéines de poulet, 1 à 2,5 % en poids de sel de cuisine, 12 à 25 % en poids d'eau ainsi que des agents oxydants et du glucose pour obtenir une masse ;
b) remplissage de la masse dans une enveloppe ;
c) cuisson de la masse servant au remplissage.

2. Procédé selon la revendication 1, **caractérisé en ce que** pour le broyage, des protéines de poulets sont ajoutées au matériau de broyage.

3. Procédé selon la revendication 1 ou 2, **caractérisé en ce que** le broyage est réalisé par découpage fin.

4. Procédé selon l'une quelconque des revendications 1 à 3, **caractérisé en ce que** la cuisson est réalisée dans un fumoir.

5. Procédé selon l'une quelconque des revendications 1 à 4, **caractérisé en ce que** la température de cuisson et le temps de cuisson sont choisis de telle façon qu'une température à cœur de la masse servant au remplissage d'au moins 70 °C, en particulier d'au moins 72 °C, soit atteinte.

6. Procédé selon l'une quelconque des revendications 1 à 5, **caractérisé en ce que** la masse servant au remplissage est passée sous l'eau froide après la cuisson.
